(19) Europäisches Patentamt / European Patent Office / Office européen des brevets

(11) **EP 3 990 689 B1**

(12) **EUROPEAN PATENT SPECIFICATION**

(45) Date of publication and mention
of the grant of the patent:
**25.12.2024 Bulletin 2024/52**

(21) Application number: **19735531.6**

(22) Date of filing: **28.06.2019**

(51) International Patent Classification (IPC):
*D06F 58/02* (2006.01)  *D06F 58/30* (2020.01)
*D06F 58/38* (2020.01)  *D06F 58/50* (2020.01)
*D06F 103/08* (2020.01)

(52) Cooperative Patent Classification (CPC):
**D06F 58/02; D06F 58/30;** D06F 58/38; D06F 58/50;
D06F 2103/08

(86) International application number:
**PCT/EP2019/067382**

(87) International publication number:
**WO 2020/259848 (30.12.2020 Gazette 2020/53)**

(54) **LAUNDRY DRYING MACHINE AND CONTROL METHOD THEREOF**

WÄSCHETROCKNER UND STEUERVERFAHREN DAFÜR

MACHINE SÈCHE-LINGE ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.05.2022 Bulletin 2022/18**

(73) Proprietor: **ELECTROLUX APPLIANCES
AKTIEBOLAG
105 45 Stockholm (SE)**

(72) Inventors:
• **BEGHI, Alessandro**
**35131 Padova (PD) (IT)**
• **SUSTO, Gian, Antonio**
**35131 Padova (PD) (IT)**
• **ZAMBONIN, Giuliano**
**35131 Padova (PD) (IT)**
• **ALTINIER, Fabio**
**33080 Porcia (PN) (IT)**
• **GIROTTO, Terenzio**
**33080 Porcia (PN) (IT)**
• **RAMPAZZO, Mirco**
**35131 Padova (PD) (IT)**

(74) Representative: **Electrolux Group Patents
AB Electrolux
Group Patents
S:t Göransgatan 143
105 45 Stockholm (SE)**

(56) References cited:
**EP-A1- 2 599 913**   **EP-A1- 2 927 366**
**WO-A1-2018/121850**   **JP-A- 2019 097 954**
**US-A1- 2017 145 619**

**EP 3 990 689 B1**

**Description**

The present invention relates to a laundry drying machine and a method for controlling said machine. More specifically, the present invention concerns the estimation of laundry moisture in a domestic laundry drying machine which may be embodied as a dryer able to dry clothes, or as a washer-dryer operable to wash and/or dry clothes.

Methods for controlling laundry drying machines are known, in which: hot air is supplied into a drum so as to flow over the laundry inside the drum; a moisture sensor system comprising measuring electrodes positioned inside the drum for contacting the laundry measure the impedance of the laundry; the moisture of the laundry is determined on the basis of the impedance measurement; and the drying cycle is stopped when the impedance measurement reaches a time-constant comparison threshold associated to a predetermined final moisture.

The drying process is a chaotic process, which is subjected to many different conditions related to the laundry load and its composition. During a drying cycle, the laundry tumbling inside the drum makes measures related to the moisture affected by noises. So signals processing like filtering is also necessary in the sensing system. Though effective and accurate, the above methods are not suitable to be used in rotatable drum washer-dryers, because the measuring sensors/electrodes cannot be arranged in the drum for contacting the laundry, due to specific architecture of the washer-dryers, and to the fact that the drum is used also for washing operations.

For such reasons, nowadays, some drum washer-dryers without moisture sensors system, implements algorithms which estimate the moisture of the laundry based on physical quantities, which are generally used to control the washing-drying cycle.

More specifically, estimating algorithms are based on the choice of suitable signals containing physical quantities being informative for the evolution of the cycle, such as temperatures and motor torque and the intersection between this signal and suitable thresholds for each load size and each machine temperature where thresholds are chosen observing data available from laboratories.

A technical problem related to the above cited algorithms is due to the time spent by the operator to set the thresholds for each case, so the current algorithms are subjected to time-consuming calibration procedures.

EP2927366A1 relates to a method of correcting an estimation of an apparatus operation value for a laundry treatment apparatus, in particular a laundry dryer or a washing machine having a drying function, the laundry dryer or washing machine comprising a rotatable laundry drum, an electric motor for rotating said drum, and a hot air generator for supplying a drying airflow to the drum, with the drying being controlled based on operation parameters such as drum speed and torque, air fan speed, and drying air temperatures at the drum inlet and outlet, and an algorithm being executed to estimate, for instance, the residual humidity value. JP2019097954A relates to a drying prediction system and a drying prediction program for performing a drying reservation of a drying target such as laundry. EP2599913A1 relates to an electronic control system configured to calculate an estimated duration of a drying cycle based on calculated moment of inertia of the laundry loaded in the drum.

In depth research has been carried out by the Applicant to provide a simple and inexpensive solution suitable to be used in a laundry drying machine and washer-dryer machines, which improves performances of the machine in order to guarantee an automatic end-of-the-cycle that is precise and robust for several composition of laundry typology subject to a drying process.

According to the present invention, there is provided a method to control a laundry drying machine, which comprises: a rotatable laundry drum designed to rotate about an axis and adapted to be loaded with laundry, an electric motor for rotating said rotatable laundry drum about its axis, hot air generator means for supplying a drying airflow to the laundry drum; the method comprising the step of controlling said electric motor and said hot air generator means during a drying cycle, based on one or more physicals quantities being associated with said rotatable laundry drum loaded with laundry, said electric motor and said hot air generator means, collecting said physicals quantities during a initial phase of said drying cycle, wherein the physicals quantities to be collected during said initial phase comprise: a first quantity indicative of the inertia of said laundry drum loaded with laundry, a second quantity indicative of the temperature of the drying airflow, a third quantity indicative of a static unbalance of said laundry drum loaded with laundry, a fourth quantity indicative of the speed of a fan comprised in said hot air generator means, a fifth quantity indicative of the air temperature at the outlet of the drum, a sixth quantity indicative of motor torque, a seventh quantity indicative of the mean torque during the drying cycle, performing an estimation of polynomial coefficients of a cubic polynomial model indicative of an estimated change of the laundry moisture over the time, based on respective linear polynomial models comprising said collected physicals quantities, and performing an estimation of the laundry moisture by said cubic polynomial model based on said estimated polynomial coefficients.

Preferably, the cubic polynomial model comprises a cubic function:

$$\hat{Y}(t)=a+b*t+c*t^2+d*t^3$$

2

wherein a, b, c, and d, are said polynomial coefficients,

$\hat{Y}(t)$ is indicative of the laundry moisture,

t is the instant wherein the laundry moisture is estimated.

Preferably, said polynomial coefficients are estimated by the following linear polynomial models:

$$a = \alpha 0 + \alpha 1^* x1 + \alpha 2^* x2 + \alpha 3^* x3 + \alpha 4^* x4 + \alpha 5^* x5 + \alpha 6^* x6 + \alpha 7^* x7$$

$$b = \beta 0 + \beta 1^* x1 + \beta 2^* x2 + \beta 3^* x3 + \beta 4^* x4 + \beta 5^* x5 + \beta 6^* x6 + \beta 7^* x7$$

$$c = \gamma 0 + \gamma 1^* x1 + \gamma 2^* x2 + \gamma 3^* x3 + \gamma 4^* x4 + \gamma 5^* x5 + \gamma 6^* x6 + \gamma 7^* x7$$

$$d = \delta 0 + \delta 1^* x1 + \delta 2^* x2 + \delta 3^* x3 + \delta 4^* x4 + \delta 5^* x5 + \delta 6^* x6 + \delta 7^* x7$$

wherein:

$(\alpha 0, \alpha 1, \alpha 2, \alpha 3, \alpha 4, \alpha 5, \alpha 6, \alpha 7), (\beta 0, \beta 1, \beta 2, \beta 3, \beta 4, \beta 5, \beta 6, \beta 7), (\gamma 0, \gamma 1, \gamma 2, \gamma 3, \gamma 4, \gamma 5, \gamma 6, \gamma 7), (\delta 0, \delta 1, \delta 2, \delta 3, \delta 4, \delta 5, \delta 6, \delta 7)$ are vectors of coefficients of linear polynomial models from linear regression used to estimate the polynomial coefficients a, b, c, d of the cubic polynomial model,
x1, x2, x3, x4, x5, x6 and x7 are variables associated with said collected physicals quantities,
a, b, c and d are said polynomial coefficients of said cubic polynomial to be estimated.

Preferably, the method comprises:

-    estimating the weight of the laundry loaded in the drum,
-    estimating the coefficients of linear polynomial models based on said estimated laundry weight.

Preferably, the method comprises: ending the drying cycle based on a comparison between the moisture estimated by said cubic polynomial model at prefixed instants, and a moisture threshold.
Preferably, the method comprises: estimating, during said drying cycle, the time to end of said drying cycle based on a comparison between the moisture estimated by said cubic polynomial model and said moisture threshold and providing to the user information indicative of said estimated time to end.
Preferably, the method comprises: calculating a derivative value by performing a derivative of said cubic function associated to said cubic polynomial model, and modifying said cubic polynomial model based on the derivative value.
Preferably, the method comprises: estimating the moisture of the laundry load during the initial phase of said drying cycle by means of said cubic polynomial model $\hat{Y}(t)$.
Preferably, the timespan of said initial phase of said drying cycle is greater than, or equal to, about 1 minute.
Preferably, according to a different embodiment, the timespan of said initial phase of said drying cycle is greater than, or equal to, about 3 minute.
Preferably, according to a different embodiment, the timespan of said initial phase of said drying cycle is greater than, or equal to, about 5 minute.
Preferably, according to a different embodiment, the timespan of said initial phase of said drying cycle is greater than, or equal to, about 15 minute.
Preferably, according to a different embodiment, the timespan of said initial phase of said drying cycle is greater than, or equal to, about 20 minutes.
The present invention further concerns to a laundry drying machine comprising: a rotatable laundry drum designed to rotate about an axis, an electric motor for rotating said rotatable laundry drum about its axis, hot air generator means for supplying a drying airflow to the laundry drum, electronic control means, which control said electric motor and/or said hot air generator means during a drying cycle based on physicals quantities being associated with said rotatable laundry drum, said electric motor, and said hot air generator means; said electronic control means are further configured to: collect said physicals quantities during a initial phase of said drying cycle, wherein said physicals quantities comprising: a first quantity indicative of the inertia of said laundry drum loaded with laundry, a second quantity indicative of the temperature of the drying airflow, a third quantity indicative of a static unbalance of said laundry drum loaded with laundry, a fourth quantity indicative of a fan speed comprised in said hot air generator means, a fifth quantity indicative of the air temperature at the outlet of the drum of said hot air generator means, a sixth quantity indicative of motor torque, a seventh quantity indicative of the mean torque during the drying cycle, perform an estimation of polynomial coefficients of a cubic polynomial model indicative of an estimated change of the laundry moisture over the time, based on respective linear polynomial models comprising said collected physicals quantities, and perform an estimation of the laundry moisture by said cubic polynomial model based on said estimated polynomial coefficients.

Preferably, the cubic polynomial model used by said electronic control means comprises a cubic function:

$$\hat{Y}(t)=a+b*t+c*t^2+d*t^3$$

wherein a, b, c, and d, are said polynomial coefficients,

$\hat{Y}(t)$ is indicative of the laundry moisture,
t is the instant wherein the laundry moisture is estimated.

Preferably, said electronic control means are configured to estimate said polynomial coefficients based on the following linear polynomial models:

$$a=\alpha 0+ \alpha 1*x1+ \alpha 2*x2+\alpha 3*x3+\alpha 4*x4+ \alpha 5*x5+ \alpha 6*x6+ \alpha 7*x7$$

$$b=\beta 0+ \beta 1*x1+ \beta 2*x2+ \beta 3*x3+ \beta 4*x4+ \beta 5*x5+ \beta 6*x6+ \beta 7*x7$$

$$c=\gamma 0+ \gamma 1*x1+ \gamma 2*x2+ \gamma 3*x3+ \gamma 4*x4+ \gamma 5*x5+ \gamma 6*x6+ \gamma 7*x7$$

$$d= \delta 0+ \delta 1*x1+ \delta 2*x2+ \delta 3*x3+ \delta 4*x4+ \delta 5*x5+ \delta 6*x6+ \delta 7*x7$$

wherein:

$(\alpha 0, \alpha 1, \alpha 2, \alpha 3, \alpha 4, \alpha 5, \alpha 6, \alpha 7), (\beta 0, \beta 1, \beta 2, \beta 3, \beta 4, \beta 5, \beta 6, \beta 7), (\gamma 0, \gamma 1, \gamma 2, \gamma 3, \gamma 4, \gamma 5, \gamma 6, \gamma 7), (\delta 0, \delta 1, \delta 2, \delta 3, \delta 4, \delta 5, \delta 6, \delta 7)$ are vectors of coefficients of linear polynomial models from linear regression used to estimate the polynomial coefficients a, b, c, d of a cubic polynomial model,
x1, x2, x3, x4, x5, x6 and x7 are variables associated with said physicals quantities,
a, b, c and d are said polynomial coefficients of said cubic polynomial to be estimated.

Preferably, said electronic control means are configured to: estimate the weight of the laundry loaded in said drum, and estimate the coefficients of linear polynomial models based on said estimated laundry weight.
Preferably, the electronic control means are configured to end the drying cycle based on a comparison between the moisture estimated by said cubic polynomial model at prefixed instants and a moisture threshold.
Preferably, the electronic control means are configured to estimate, during said drying cycle, the time to end of said drying cycle based on a comparison between the moisture estimated by said cubic polynomial model and said moisture threshold, and provide to the user information indicative of said estimated time to end.
Preferably, the electronic control means are configured to calculate a derivative value by performing a derivative of said cubic function associated to said cubic polynomial model, and modify said cubic polynomial model based on the derivative value.
Preferably, the electronic control means are configured to estimate the moisture of the laundry load during the initial phase of said drying cycle by means of said cubic polynomial model $\hat{Y}(t)$.
Preferably, the timespan of said initial phase of said drying cycle is greater than, or equal to, about 1 minute.
Preferably, according to a different embodiment, the timespan of said initial phase of said drying cycle is greater than, or equal to, about 3 minute.
Preferably, according to a different embodiment, the timespan of said initial phase of said drying cycle is greater than, or equal to, about 5 minute.
Preferably, according to a different embodiment, the timespan of said initial phase of said drying cycle is greater than, or equal to, about 15 minute.
Preferably, according to a different embodiment, the timespan of said initial phase of said drying cycle is greater than, or equal to, about 20 minutes.
A non limiting embodiment of the present invention will be now described, by way of example, with reference to the accompanying drawings, in which:

Figure 1 is a perspective view illustrating a laundry drying machine embodied as a washer/drier according to the present disclosure/invention,

Figure 2 is an a schematic view of the laundry drying machine according to the present disclosure/invention,

Figure 3 is a flow chart of the control method provided according to the present invention, and

Figures 4a and 4b schematically illustrate an offline circuit blocks and respectively an online circuit blocks, used to estimate the laundry moisture according to the present invention.

Configurations shown in embodiments enumerated in the present specification and the drawings are just exemplary embodiments of the present disclosure, and it should be understood that there are various modified examples capable of replacing the embodiments of the present specification and the drawings at the time of filling the present application.

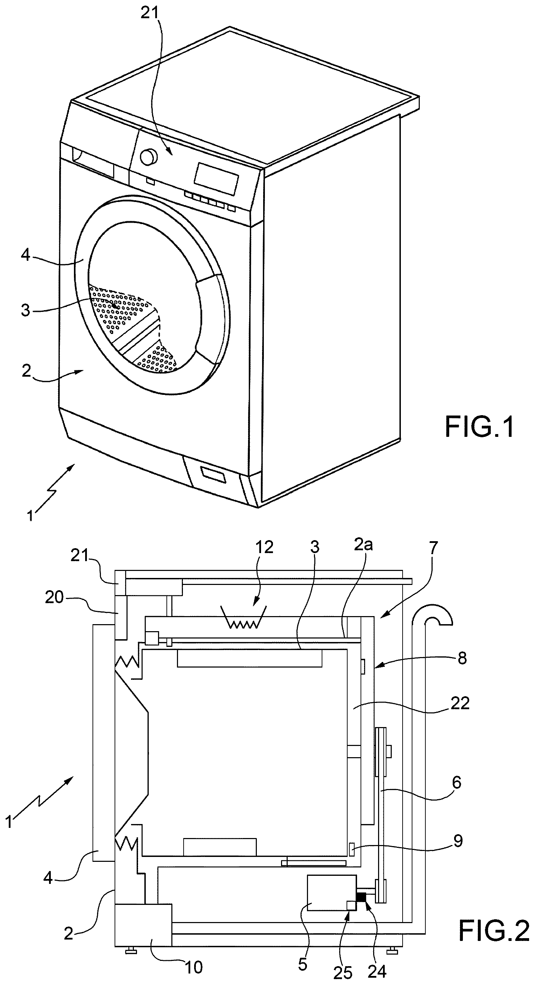

With reference to Figure 1, referral number 1 indicates as a whole a home laundry-drying machine, which may be embodied as a rotatable-drum laundry dryer, or as a rotatable drum laundry washer-dryer, to which the following description refers purely by way of example without implying any loss of generality.

According to the preferred embodiment shown in Figure 1, laundry-drying machine 1 comprises an outer casing 2 that preferably rests on the floor on a number of feet. Casing 2 supports a tub 2a that houses a rotatable laundry drum 3. Drum 3 defines a chamber for accommodating laundry and rotates about a preferably, though not necessarily, horizontal axis of rotation. In an alternative embodiment not shown, axis of rotation may be vertical or inclined. Drum 3 has a front access opening closable by a door 4 preferably hinged to casing 2.

With reference to the schematic example in Figure 2, drum 3 may be rotated about the axis of rotation by an electric motor 5, which is mechanically connected to the rotatable drum 3 through a drive member 6 for transmitting the motion for driving the rotatable-drum 3 in rotation about its axis.

Referring to Figure 2, laundry drying machine 1 also comprises a hot-air system 7 housed inside the casing 2, and designed to circulate through the drum 3 a stream of hot air having a low moisture level, and which flows over and dries the laundry inside the drum 3. During the drying cycle, hot-air system 7 provides for gradually drawing air from drum 3; extracting moisture from the air drawn from drum 3; heating the dehumidified air to a predetermined temperature based on the selected drying cycle; and supplying the heated, dehumidified air cyclically back into drum 3, where it flows over the laundry inside the drum 3 to dry it.

Referring to a preferred exemplary embodiment shown in Figure 2, hot air system 7 is operable for continually dehumidifying and heating the air circulating inside drum 3 to dry the laundry inside the drum 3, and substantially comprises:

- a heating device 12,
- an air recirculating conduit 8 presenting the two opposite ends connected to the drum 3,
- a fan 9 located along recirculating conduit 8 to produce inside the latter an airflow which flows into drum 3 and over the laundry inside the drum 3,
- preferably although not necessary, a condensing system 10, which is able to cool the airflow coming out from drum 3 for condensing the moisture in the airflow, and
- the heating device 12 which is able to heat the airflow returning back into rotatable drum 3, so that the airflow entering into the drum 3 is heated to a temperature higher than or equal to that of the same air flowing out of the drum 3.

With regard to the heating device 12, it may advantageously comprise a number of electric heating components, such as electric resistors located inside the air recirculating conduit 8 to dissipate electric power by Joule effect so as to heat the air supplied to drum 3.

Regarding the condensing system 10, it may comprise, for example, a water spraying nozzle designed to condense the moisture in the airflow through the air recirculating conduit 8. It should be pointed out that condensing system 10 applies, purely by way of example, to one possible embodiment of the present invention, and may be omitted in the case of a vented type rotatable drum laundry machine 1 (i.e. a dryer in which the hot and moisture-laden drying air from the drum 3 is expelled directly out of rotatable-drum laundry drier 1).

With reference to a preferred embodiment shown in Figure 2, the air recirculating conduit 8 presents a first end connected to the tub, through a first opening forming an input air-duct of the tub. The second end of the air recirculating conduit 8 may be connected to the tub , through a second opening forming an output air duct of the tub. In actual use, fan 9 blows a stream of drying air heated by heating device 12, to the input air-duct of the tub. After contacting laundry inside drum 3, the moisture-laden drying air flows out from rotatable drum 3 and tub, through the output air duct, and it is preferably directed to the condensing system 10, which cools the drying air to condense the moisture inside it.

Laundry drying machine 1 further comprises an electronic control system 20 configured to control the operation performed by the laundry drying machine 1 preferably on the basis of a drying cycle selected by a user through the control panel 21, according to the control method which will be hereinafter disclosed in detail.

According to a preferred embodiment of the present invention, the electronic control system 20 may comprise: a temperature sensing system 22, which is configured to sense the temperature along the air recirculating conduit 8. Preferably, the temperature may be indicative of the airflow temperature at the beginning of the drying cycle. Preferably, the temperature may be also indicative of the output-temperature of the airflow, which flows out of drum 3 through the output air-duct.

According to a preferred embodiment shown in Figure 1, the temperature measuring system 22 may comprise a temperature sensor arranged on input air duct to sense the temperature at the beginning of the drying cycle. According to a preferred embodiment shown in Figure 1, the temperature measuring system 22 may also comprise a temperature sensor to sense the output-temperature of the heated airflow which flows out of drum 3 through the output air-duct.

The electronic control system 20 may further comprise a torque measuring device 24 designed to output a torque signal which is indicative of the torque value provided to the rotatable drum 3 by the electric motor 5. The torque signal may be indicative of the strength developed by the drum motor 5 to rotate the drum 3 during the drying cycle. The torque signal may be determined by sensing the motor torque itself or, for example by measuring electrical parameters associated to the torque and calculating the torque based on the measured electrical parameters, such as the current through the electric motor 5, and/or the voltage of the electric motor 5, and/or the magnetic flux in the electric motor 5 and the like.

The electronic control system 20 may further comprise an inertia measuring device 25 designed to output an inertia signal, which is indicative of the inertia value of the laundry drum 3 loaded with the laundry. The inertia signal may be determined by sensing the inertia itself or, for example by measuring electrical parameters associated to the torque and calculating the inertia based on the measured electrical parameters, such as the current through the electric motor 5, and/or the voltage of the electric motor 5, and/or the magnetic flux in the electric motor 5 and the like.

It is understood that hereinafter parameters estimated by electric signals, and or measured, and/or calculated by the electronic control system 20 will be indicated with "physicals quantities". Preferably, the physicals quantities may comprise a first quantity indicative of the inertia of laundry drum 3 loaded with the laundry. Preferably, the physicals quantities may further comprise a second quantity indicative of the temperature of the machine. Preferably, the second quantity is indicative of a hot condition of the laundry drying machine, i.e. a machine which has already performed one or more drying cycle before the actual drying cycle, or a cold condition when the machine is performing the first drying cycle. For example, the second quantity may comprise a variable having a first value in the hot machine condition and a second value in the cold machine condition.

Preferably, the physicals quantities may further comprise a third quantity indicative of a static unbalance of the laundry drum 3 loaded with the laundry. Preferably, the physicals quantities may further comprise a fourth quantity indicative of the speed of the fan 9. Preferably, the physicals quantities may further comprise a fifth quantity indicative of temperature at the outlet of the tub 2a. Preferably, the physicals quantities may further comprise a sixth quantity indicative of the max motor torque during the drying cycle. Preferably, the max motor torque is determined in a interval wherein the speed of the drum 3 is greater than 200 rpm. Preferably, the physicals quantities may further comprise a seventh quantity indicative of the motor torque variation during the first prefixed timespan.

It is understood that the present invention is not limited to physicals quantities listed above, but alternatively, or in addition, it may comprise other physicals quantities. Preferably, the additional or alternative physicals quantities may be available in input of the electronic control unit 20, i.e. provided by sensor or measuring systems placed in the machine.

It is understood that during the drying cycle, the electronic control unit 20 controls the rotatable laundry drum 3, the electric motor 5 and the hot air system 7 based on physicals quantities and the selected cycle.

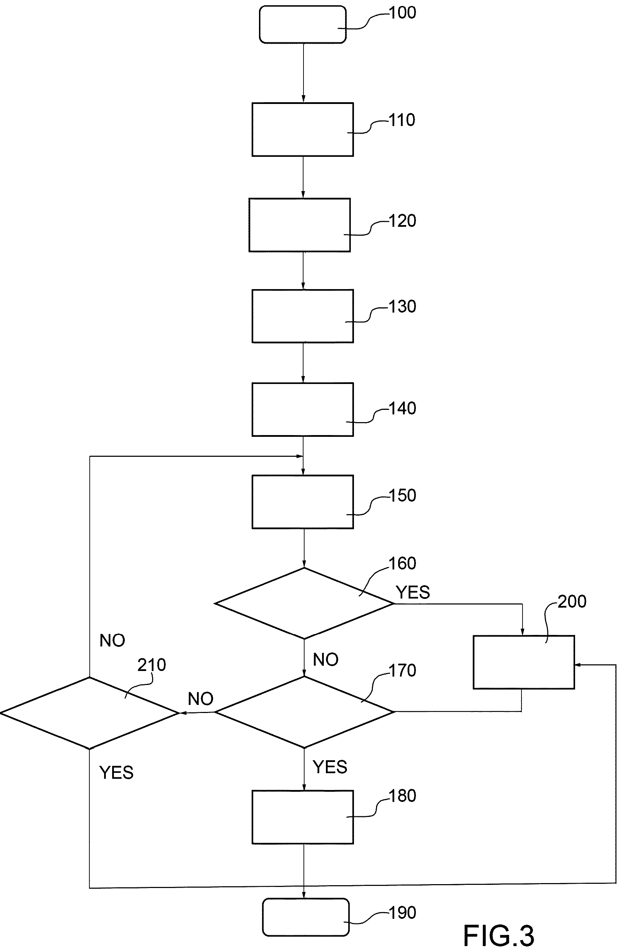

Figure 3 is as flow chart of the operating-phases performed by the control method for controlling the laundry drying machine shown in Figure 1.

At the beginning of the method, the electronic control system 20 starts the drying cycle (block 100) based on the drying cycle selection made by a user through the control panel 21. After the drying cycle has been selected and started, the electronic control system 20 controls the electric motor 5 to cause the drum 3 to rotate at pre-set rotation speeds about the axis of rotation according to the drying cycle and switches-on the hot-air system 11, i.e. the heating device 12 and/or the fan 9, to start dehumidifying and heating the air circulating inside rotatable-drum 3 to dry the laundry inside the drum 3.

According to an embodiment, preferably although not necessarily, the electronic control system 20 may be configured to perform a load estimation. Preferably, the electronic control system 20 may estimate the weight of the laundry in the drum (block 110).

According to the method, the electronic control system 20 collects the physical quantities during an initial phase of the drying phase (block 120).

The initial phase may correspond to the phase in which the laundry is heated and ends, when the moisture of the laundry starts to reduce due to the drying. The timespan of the initial phase may depend on the weight of the laundry loaded in the drum. The timespan of the initial phase can be reduced or extended as the weight of the laundry load reduces or increases, respectively.

According to a preferred embodiment, the duration or timespan may be greater than, or equal to 20 minutes. The Applicant has found that a prefixed timespan of 20 minutes is convenient for laundry loads having a medium-weight because, the electronic control system 20 collects an amount of data (physical quantities) which allow to carry out an accurate estimate of the moisture.

It is however understood that the present invention is not limited to a timespan of 20 minutes.

According to a first different embodiment, the timespan of the initial phase may be 1 minute.

According to a second different embodiment, the timespan of the initial phase may be 3 minutes.

According to a third different embodiment, the timespan of the initial phase may be 10 minutes.

According to a forth different embodiment, the timespan of the initial phase may be 15 minutes.

According to a preferred embodiment, during the initial phase, the electronic control system 20 may collect : the first quantity indicative of the inertia of laundry drum 3, the second quantity indicative of the hot or cold condition of the laundry drying machine, the third quantity indicative of a static unbalance of the laundry drum 3, the fourth quantity indicative of the speed of the fan 9, the fifth quantity indicative of temperature at the outlet of the tube, the sixth quantity indicative of the max motor torque during the drying cycle, and the seventh quantity indicative of motor torque variation-during the first prefixed timespan (block 130).

In the block 140, the electronic control system 20 performs an estimation of polynomial coefficients a, b, c, d of a cubic polynomial model indicative of an estimated change of the laundry moisture over the time, based on respective linear polynomial models comprising the physicals quantities which has been collected during the initial phase.

More specifically, said cubic polynomial model comprises a cubic function:

$$\hat{Y}(t) = a + b*t + c*t^2 + d*t^3$$

wherein a, b, c, and d, are said polynomial coefficients,

$\hat{Y}(t)$ is indicative of the laundry moisture at instant t,

t is the instant wherein the laundry moisture is estimated (preferably, in minutes).

More specifically in the block 140 polynomial coefficients are estimated by the following linear polynomial models:

$$a = \alpha0 + \alpha1*x1 + \alpha2*x2 + \alpha3*x3 + \alpha4*x4 + \alpha5*x5 + \alpha6*x6 + \alpha7*x7$$

$$b = \beta0 + \beta1*x1 + \beta2*x2 + \beta3*x3 + \beta4*x4 + \beta5*x5 + \beta6*x6 + \beta7*x7$$

$$c = \gamma0 + \gamma1*x1 + \gamma2*x2 + \gamma3*x3 + \gamma4*x4 + \gamma5*x5 + \gamma6*x6 + \gamma7*x7$$

$$d = \delta0 + \delta1*x1 + \delta2*x2 + \delta3*x3 + \delta4*x4 + \delta5*x5 + \delta6*x6 + \delta7*x7$$

wherein:

$(\alpha0, \alpha1, \alpha2, \alpha3, \alpha4, \alpha5, \alpha6, \alpha7), (\beta0, \beta1, \beta2, \beta3, \beta4, \beta5, \beta6, \beta7), (\gamma0, \gamma1, \gamma2, \gamma3, \gamma4, \gamma5, \gamma6, \gamma7), (60, \delta1, \delta2, \delta3, \delta4, \delta5, \delta6, \delta7)$ are vectors of coefficients of linear polynomial models from linear regression used to estimate the polynomial coefficients a, b, c, d of a cubic polynomial model,

x1, x2, x3, x4, x5, x6 and x7 are variables associated with said physicals quantities,

a, b, c and d are said polynomial coefficients of said cubic polynomial to be estimated.

It is understood that according to an embodiment wherein the method further performs the estimation of the laundry weight in the block 110, the method further performs in the block 160, the step of determining the coefficients $(\alpha0, \alpha1, \alpha2, \alpha3, \alpha4, \alpha5, \alpha6, \alpha7), (\beta0, \beta1, \beta2, \beta3, \beta4, \beta5, \beta6, \beta7), (\gamma0, \gamma1, \gamma2, \gamma3, \gamma4, \gamma5, \gamma6, \gamma7), (\delta0, \delta1, \delta2, \delta3, \delta4, \delta5, \delta6, \delta7)$ of the linear polynomial models based on the estimated laundry weight. In this respect a memory unit (not illustrated) of the electronic control system 20 may contain for any laundry weight, or range of weight, respective set/vector of coefficients of the linear polynomial models:

$\alpha0(wi), \alpha1(wi), \alpha2(wi), \alpha3(wi), \alpha4(wi), \alpha5(wi), \alpha6(wi), \alpha7(wi)$
$\beta0(wi), \beta1(wi), \beta2(wi), \beta3(wi), \beta4(wi), \beta5(wi), \beta6(wi), \beta7(wi))$

γ0(wi),γ1(wi), γ2(wi), γ3(wi),γ4(wi), γ5(wi),γ6(wi),γ7(wi)

δ0(wi),δ1(wi),δ2(wi), δ3(wi), δ4(wi),δ5(wi), δ6(wi),δ7(wi).

wherein

"wi" is the weight of the laundry in the drum estimated in block 110.

Applicant has found that once the estimation of the laundry load weight is available, it may be used to conveniently select the correct set of coefficients of the linear models employed to estimate the moisture model coefficients/parameters (a, b, c, d) of the cubic polynomial.

This estimation helps to solve problems related to the robustness of the estimated coefficients. Indeed the method imposes some conditions on fit in order to limit the variability of the resulting values of estimated parameters. For example the method may imposes the initial moisture value for each case.

For each available drying test, Applicant compared the moisture reference from balance with a candidate model imposing that the first value provided by the candidate is exactly the initial value of the reference. This means imposing that the parameter "a" in $\hat{Y}(t)=a+b*t+c*t^2+d*t^3$ assumes the initial laundry moisture content available from data because the $\hat{Y}(t)=a+b*t+c*t^2+d*t^3$ when t=0[s] is equal to "a" value. This constrain allows to conveniently obtain more stable fit parameters which are then used as references for linear estimators and therefore more stable estimations in the online procedure.

In the block 140, the method may further set a control variable CONT with a OFF status. The OFF status may be indicative of a condition wherein the cubic polynomial model estimated by the electronic control system 20 is correct. In the block 140 the electronic control system 20 sets control variable CONT=OFF.

In the block 150, the electronic control system 20 estimates the laundry moisture by said cubic polynomial model $\hat{Y}(t)$ based on said polynomial coefficients, a, b, c, and d being estimated in block 140. It is understood that the parameters have been estimated, the last passage deals with the use of polynomial structure to determine the moisture estimated value using current time sample, i.e. every about 1 second, and estimated parameters.

Preferably, in the block 150, electronic control system 20 may also estimate, instant by instant, the time to end TTE by the cubic polynomial model $\hat{Y}(t)$ and a target moisture TM.

Preferably, the time to end TTE may be estimated by calculating the instant t wherein the moisture of the cubic polynomial model $\hat{Y}(t)$ reaches the target moisture TM. For example, the electronic control system 20 may estimate the time to end TTE by performing a comparison between the moisture estimated by the cubic polynomial model $\hat{Y}(t)$ and the target moisture TM. In the block 150, the electronic control system 20 may display the estimated time to end TTE by means of the control panel 21.

It is understood that the time to end is the indication of the remaining amount of time to end the drying cycle. Preferably the electronic control system 20 may calculate and update the displayed time to end TTE instant by instant (i.e. second). For example at each instant, electronic control system 20 may compare the estimated moisture with the target moisture TM (for example 0%). Since the cubic model $\hat{Y}(t)=a+b*t+c*t^2+d*t^3$ involves time (t), the electronic control system 20 determines how long the drying cycle takes to reach the target moisture TM by considering the actual operation instant.

Preferably, in the block 150, the electronic control system 20 may also estimate the initial moisture of the laundry load by means of the cubic polynomial model $\hat{Y}(t)$. Since the cubic polynomial model $\hat{Y}(t)$ is indicative of the change of moisture of the laundry load over the time, the electronic control system 20 may conveniently estimate the moisture condition of the laundry load at the beginning of the drying cycle.

In the block 160, the electronic control system 20 calculates the derivative of the cubic polynomial model $\hat{Y}(t)$, hereinafter indicated with drying _rate(t) and controls whether its negative value which is (- drying_rate(t)) is lower than a prefixed threshold TH0, which may fixed to zero, TH0=0. In detail, in the block 160, the electronic control system 20 checks if - drying_rate(t)<TH0.

If the negative value of the drying_rate(t) is greater than, or equal to, the prefixed threshold TH0 (output NO from block 160), the electronic control system 20 controls whether the estimated moisture at the instant t, is lower than the prefixed moisture value MV (block 170). Preferably, the prefixed moisture value MV may comprise a target moisture TM added with a prefixed threshold TH1.

In the block 170, the electronic control system 20 may perform the following comparison:

$$\hat{Y}(t)<MV=(TM + TH1)$$

If the estimated moisture at the instant t, $\hat{Y}(t)$ is lower than prefixed moisture value MV (output YES from block 170), the electronic control system 20 determines the end of the cycle EOCIt is understood that the end of the cycle EOC is the drying load condition wherein the moisture of the laundry load has actually reached the prefixed moisture value MV, which may be the moisture of the dried laundry imposed/selected by the user or prefixed in the drying cycle.

Preferably, in this condition, after the end of cycle, the electronic control system 20 may further perform the cool down phase for a prefixed duration, i.e. 10 minutes (block 180), and end the method (190 block).

If the negative value of the drying_rate(t) is lower than, or equal to the prefixed threshold TH0 (output YES from block 160), the electronic control system 20 activates a control on shape of the cubic polynomial model Ŷ(t) by performing the following function: Ŷ(t)= Ŷ(t-1)-K, wherein K is a constant decrease (block 200). For example, constant decrease K may be about 0,003% .

In block 200, the electronic control system 20 changes the status of the variable CONT from OFF to ON. In block 210, CONT=ON.

After the block 200, the electronic control system 20 performs the operation disclosed in block 170, i.e. compares the estimated moisture at the instant t, Ŷ(t) with prefixed moisture value MV.

If the estimated moisture at the instant t, Ŷ(t) is greater than, or equal to, prefixed moisture value MV (output NO from block 170), the electronic control system 20 checks the status ON/OFF of the CONT variable (block 220).

If the CONT variable is ON (output YES from block 210), the electronic control system 20 further performs the operation of block 200, i.e. activate the control on shape of the cubic polynomial model.

Vice-versa, if the CONT variable is OFF (output NO from block 210), the electronic control system 20 further performs the operation of block 150 and sequentially reiterates the rest of blocks150-210 disclosed above.

It is important to point out that the cubic polynomial model's structure Ŷ(t) used in the control method is fixed but it is nonlinear and determined after a preliminary "offline" analysis comparing some candidate forms. Once the best cubic polynomial model's has been detected, the problem is the estimation of the parameters of the best model, i.e. the use of that model on the machine; in these terms, Applicant has conveniently reduced the errors due to the estimation of parameters of the model.

It is understood that the end of cycle is the procedure to stop the drying cycle in the instant in which the moisture target TM is reached. Indeed at each instant the electronic control system 20 may compare the estimated moisture with the moisture target (for example 0%). When the estimated moisture is equal to the moisture target TM, the electronic control system 20 stops the drying cycle, the electronic control system 20 waits for the instant in which this equality occurs.

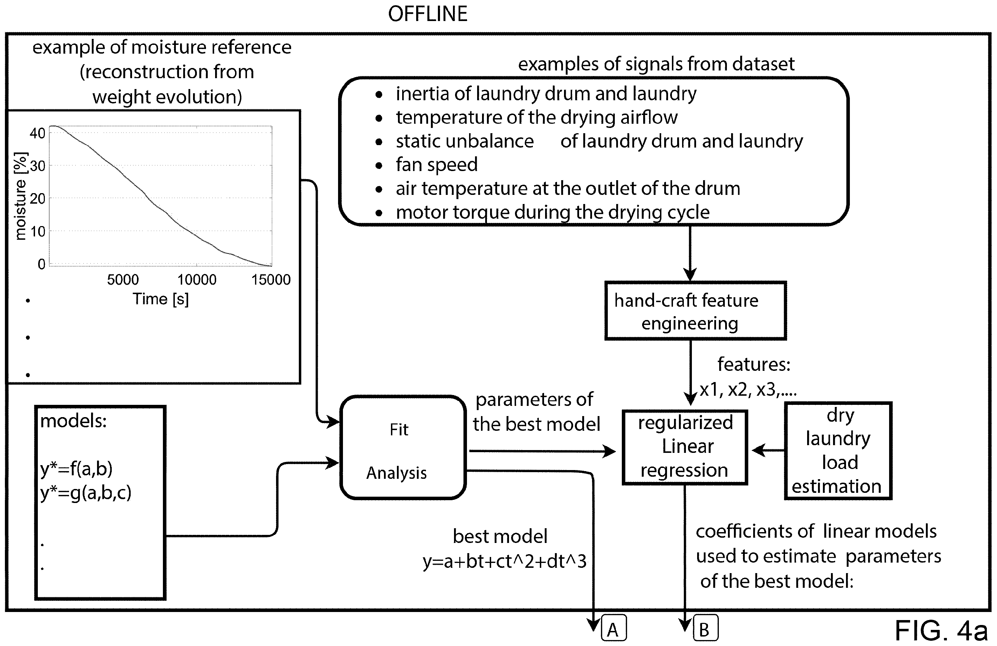

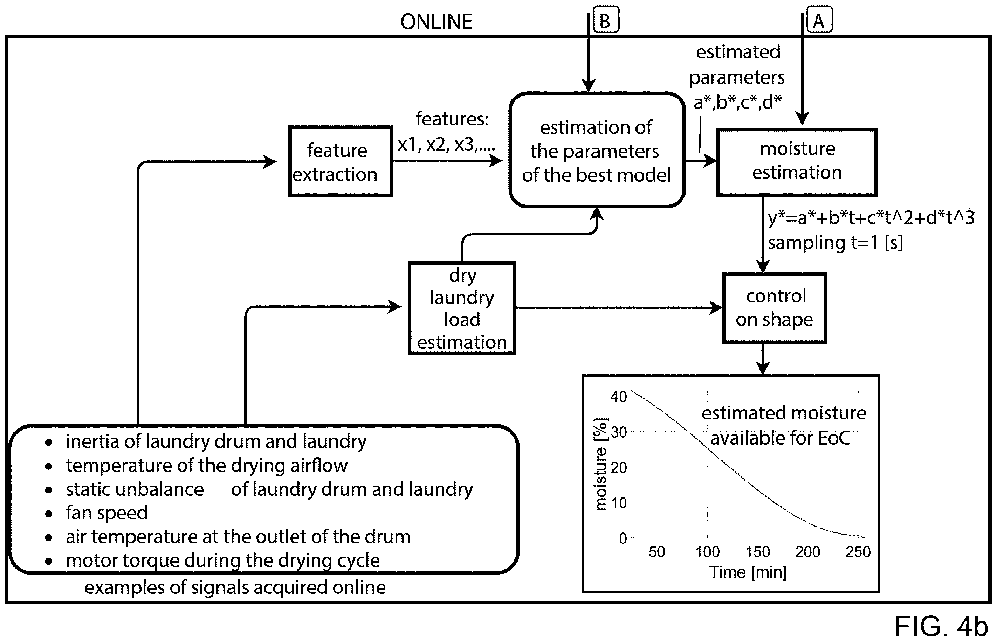

Figures 4a and 4b show schematically an explanation of the procedure. In detail, line "A" in Figures 4a and 4b connects the output of the block concerning the "fit analysis" in the OFFLINE (Fig. 4a), with the input of the block concerning the "moisture estimation" in the ONLINE (Fig. 4b).

Moreover, line "B" in Figures 4a and 4b connects the output of the block concerning the "regularized linear regression" in the OFFLINE (Fig. 4a), with the input of the block concerning the "estimation of the parameters of the best model" in the ONLINE (Figure 4b).

The available dataset has been used "offline", i.e. by laboratory test and elaborations performed by Applicant, to select the best model for the purpose. Applicant has checked performance of fitting comparing each candidate model and the available output which is the result of some elaborations from the signal of the weight evolution of laundry during drying cycle. Applicant has chosen the best model between the candidates considering some indices used for goodness-of-fit analysis: root mean square error (RMSE) and coefficient of determination (R^2).

Moreover, Applicant has also taken into account the number of parameters for each model in order to avoid too complex models for a software implementation in the electronic control system 20.

The final trade-off was found in the cubic (3rd degree) polynomial model in time (t) (in minutes):

$$\hat{Y}(t)=a+b*t+c*t^2+d*t^3$$

Moreover, Applicant has found that cubic polynomial model is the structure that provide the best fit performance and is proposed here as the model to explain the evolution of drying cycles. After fit analysis, the structure of the proposed cubic polynomial model is fixed and the values of parameters for each observation as well, i.e. for each observation the fit analysis provides the values for a, b, c, d which are used then as the output reference for the linear regression step.

As disclosed in the flow chart illustrated in Figure 3, once the cubic polynomial model and its true parameters (polynomial coefficients) are fixed, it is necessary to estimate such parameters in "online blocks", i.e. by means of the electronic control system 20 during the drying cycle using the available information from electric signals of the laundry drying machine 1. It is understood that blocks illustrated in Figure 4b (ONLINE) corresponds to operations performed by the electronic control system 20 illustrated in Figure 3.

The above disclosed method follows a linear regression procedure, using some values computed from signals as inputs. These features were defined using the Applicant knowledge and are fixed, for these reason, this step is called "hand-craft feature engineering". More specifically the hand-craft features defined and used to estimate the parameters of the cubic polynomial model corresponds to the first, second, third, fourth, fifth, sixth, and seventh quantities above disclosed in detail.

In particular hand-craft features may be available after t=20 [min] from the beginning of the drying cycle. After 20 minutes from the START phase an estimation of the laundry moisture content for the entire drying cycle is ready.

Preferably, an information that may be determined is the one related to the (dry) weight of the laundry [dry laundry load estimation block in Figure 4a - OFFLINE part], which is a value that may be estimated online (during the drying cycle) using the available information of the inertia of the laundry weight.

Applicant has found that it may be conveniently using the information of the laundry weight quantity to train a linear model offline, which is different depending on the laundry weight: the structure of the model is linear but the coefficients of the trained linear model vary depending on the laundry weight level.

It's worth underlying that some features summarize the same information exploited also in the current procedure implemented online and used for the automatic end of cycle, i.e. information from temperatures and motor torque main signals.

At the end of the offline part, the form of the model is available together with the coefficients of linear models used to estimate the parameters of the polynomial structure. Indeed, for each parameter, a linear model has been used exploiting the same set of defined features, so in this case four linear models are involved in this step.

The online part is executed by electronic control system 20 of the laundry drying machine during the drying cycle, and it deals with some simple steps implemented by the control method. The first step is the extraction process which is performed by computing the features defined in the offline part after the first part of the cycle (20 minutes from the start) in order to have time to collect useful information from signal. The second step is the merge of the computed features with the coefficients determined in the offline part and such a merge is made-up by the linear models used to estimate the (3rd degree) cubic polynomial parameters.

The set of coefficients used by the software implemented by the electronic control system 20 may vary depending on the estimation provided by the laundry weight estimation procedure [dry laundry load estimation block in Figure 4b - ONLINE part].

Once the estimation of the (dry) laundry load weight is available, it is used to select the correct set of coefficients of the linear models employed to determine the estimation of the moisture model parameters (a, b, c, d) .

In order to solve problems related to the robustness of the estimated coefficients, some software devices have been employed such as constrains on fit analysis (offline).

As regards constrains on fit, Applicant simply imposed some conditions on fit in order to limit the variability of the resulting values of estimated parameters. For example, Applicant imposed the initial moisture value for each case which means that for each available drying test Applicant compared moisture reference from balance with a candidate model imposing that the first value provided by the candidate is exactly the initial value of our reference. This means that for example, by imposing the parameter "a" in $\hat{Y}(t)=a+b*t+c*t2+d*t3$, it assumes the initial laundry moisture content available from data because the model in $\hat{Y}(t)=a+b*t+c*t2+d*t3$ when t=0 [s] is equal to "a" value.

This constrain and other allow to obtain more stable fit parameters which are then used as references for linear estimators and therefore more stable estimations in the online procedure.

Once the parameters have been estimated the last passage deals with the use of polynomial structure to determine the moisture estimated value by using current time sample in [s] and estimated parameters.

When the estimated value reaches a target value, i.e. for example 0% for Cotton Cupboard for example, the end of drying cycle is detected.

It is understood that the importance of the online part discussed above is its applicability regardless of the best structure selected by the fit analysis as the result of the offline part. In fact, for any structure which results from the offline part (for Applicant purpose it's a cubic (3rd degree) polynomial model), the online procedure could be exploited for the estimation of the parameters of the selected model once its form has been defined by the offline process. For example, if a different model (an exponential with 3 or 4 parameters) were chosen by the offline procedure, the same online process could be used exploiting the same features computed from signals and using different set of coefficients for linear models (coefficients determined offline).

The offline procedure disclosed here is general and flexible for several moisture models, not only for the best structure discussed here. i.e. the cubic polynomial model in time.

It is understood that Applicant has selected this structure as the best one on its test data in terms of fit with data moisture reference (reconstruction from the laundry weight evolution measured by the balance during drying).

The control method described above comprises a first drying phase wherein it is essential to collect information required for estimation, i.e. to compute features. In the method, Applicant has found convenient 20 minutes from the beginning of the cycle in order to collect useful information. The control method described above further comprises the regularized linear regression as a method to estimate the parameters (coefficients) of the moisture cubic polynomial model. Indeed this is the method used for the estimation of the parameters of the polynomial model. Applicant simply assumed linear models here in order to have easy procedures for implementation on firmware

The control method described above further use the cubic (3rd degree) polynomial model to estimate the laundry moisture content during drying cycles on laundry drying machines. Such a model turned out to be the best model in terms of fit performance on test data.

The control method described above further controls the polynomial shape. Indeed the precision of the model described so far depends on the precision of the estimation of parameters of the abovementioned model. When the estimation of a parameter is not precise compared to the real one (typically for parameter d), it is necessary to use a control on shape of the estimated moisture curve which consists on a simple fixed decrease of the moisture every predefined time interval [for example every minute]. This step is summarized in the flowchart in Figure 3 and is a required step of the procedure because it is an additional step that is made after the estimation provided by the polynomial model is ready. The control on shape of the cubic polynomial model may begin according to a initial time detected by observing the associated drying rate which is computed using a limited set of samples (2 samples) of the estimated moisture. When the computed drying rate goes under a certain threshold (i.e. equal to 0 [%/s]) the control starts and continues until the moisture target is reached (i.e. 0% in case of Cotton Cupboard).

As an explanation of variables mentioned in the flow chart (Figure 3) it is pointed out that: alpha, beta, gamma, delta as symbols used to represent the coefficients selected offline; the right set of coefficients is determined by using the laundry load estimation procedure as discussed above.

Once the estimated moisture is available and it is used to detect an "anomalous" shape of the estimation, i.e. when the (3rd degree) cubic polynomial starts to increase: this behaviors is indeed not associated with an expected behavior of a drying process. When -drying_rate<0 the variable named CONT, which is initialized OFF, becomes ON and the estimated moisture is then computed using a fixed decrease for each time=1[s]. The final part of the drying cycle is represented by the COOL DOWN and it stands for a cooling phase for the entire cycle.

Some steps of the procedure described so far could be considered optional and are summarized below: Updates of the laundry estimation after 20 [min] during drying cycle. In particular they could be used to update the estimation of parameters of the polynomial model in order to improve the moisture estimation, especially for the final phase of the cycle. As regards the offline part illustrated in Figure 4a, some operations could be considered optional, such as the imposition of some constrains for fit analysis and the portion of moisture reference used for fit.

In fact, another choice could be the use of only the last part of the cycle (under 20% of reconstructed moisture signal) as the reference in order to obtain a fit specialized for the end of cycle of each observation. Such a choice had been experimented by Applicant and left because it was proven that, using test data, a fit analysis taking into account the entire moisture reference gives better estimation results once the parameters of the polynomial model are estimated. A fit analysis which focus only on the last part of the cycle could be reconsidered in case of a richer dataset or using different machines. The approaches proposed for laundry moisture content determination on laundry drying machine could be adapted and used also for other different machines such as condense washer-dryers or domestic tumble dryers (condense or heat pump) keeping the main steps illustrated before and modifying the definition of signals used as direct inputs or as a initial point to compute different features from ones explained above.

The method above disclosed has the advantages of being a simple and inexpensive solution (considering that no dedicated physical sensor is used for the determination of the desired quantity. i.e. the laundry moisture content) suitable to be used in a laundry drying machine which improves performances of the machine, and guarantee an automatic end-of-the-cycle that is precise and robust for several composition of laundry typology subject to a drying process, in particular on household washer-dryer machines without a moisture sensor system.

Clearly, changes and variations may be made to the laundry-treating machine and the control method without, however, departing from the scope of the present invention.

## Claims

1. Method to control a laundry drying machine (1), which comprises:

   a rotatable laundry drum (3) designed to rotate about an axis (6) and adapted to be loaded with laundry, an electric motor (9) for rotating said rotatable laundry drum (3) about its axis (6), hot air generator means (11) for supplying a drying airflow to the laundry drum (3), said method comprising the step of controlling said electric motor (9) and said hot air generator means (11) during a drying cycle, based on one or more physicals quantities being associated with said rotatable laundry drum (3) loaded with laundry, said electric motor (9) and said hot air generator means (11),

   the method further comprising:

   a) collecting said physicals quantities during an initial phase of said drying cycle, wherein said physicals quantities to be collected during said initial phase comprise: a first quantity indicative of the inertia of said laundry drum loaded with laundry, a second quantity indicative of the temperature of the drying airflow, a third quantity indicative of a static unbalance of said laundry drum loaded with laundry, a fourth quantity indicative of a fan speed comprised in said hot air generator means (11), a fifth quantity indicative of the air temperature at the outlet of the drum of said hot air generator means (11), a sixth quantity indicative of motor torque, a seventh quantity indicative of the mean torque during the drying cycle,
b) performing an estimation of polynomial coefficients of a cubic polynomial model indicative of an estimated change of the laundry moisture over the time, based on respective linear polynomial models comprising said collected physicals quantities,
c) performing an estimation of the laundry moisture by said cubic polynomial model based on said estimated polynomial coefficients.

2. Method according to claim 1, wherein said cubic polynomial model comprises a cubic function:

$$\hat{Y}(t)=a+b*t+c*t^2+d*t^3$$

wherein a, b, c, and d, are said polynomial coefficients,
$\hat{Y}(t)$ is indicative of the laundry moisture,
t is the instant wherein the laundry moisture is estimated.

3. Method according to claim 2, wherein said polynomial coefficients are estimated by the following linear polynomial models:

$$a=\alpha0+ \alpha1*x1+ \alpha2*x2+\alpha3*x3+\alpha4*x4+ \alpha5*x5+ \alpha6*x6+ \alpha7*x7$$

$$b=\beta0+ \beta1*x1+ \beta2*x2+ \beta3*x3+ \beta4*x4+ \beta5*x5+ \beta6*x6+ \beta7*x7$$

$$c=\gamma0+ \gamma1*x1+ \gamma2*x2+ \gamma3*x3+ \gamma4*x4+ \gamma5*x5+ \gamma6*x6+ \gamma7*x7$$

$$d= \delta0+ \delta1*x1+ \delta2*x2+ \delta3*x3+ \delta4*x4+ \delta5*x5+ \delta6*x6+ \delta7*x7$$

wherein:

$\alpha0, \alpha1, \alpha2, \alpha3, \alpha4, \alpha5, \alpha6, \alpha7, \beta0, \beta1, \beta2, \beta3, \beta4, \beta5, \beta6, \beta7, \gamma0, \gamma1, \gamma2, \gamma3, \gamma4, \gamma5, \gamma6, \gamma7, \delta0, \delta1, \delta2, \delta3, \delta4, \delta5, \delta6, \delta7$ are vectors of coefficients of linear polynomial models from linear regression used to estimate the polynomial coefficients a, b, c, d of a cubic polynomial model,
x1, x2, x3, x4, x5, x6 and x7 are variables associated with said collected physicals quantities,
a, b, c and d are said polynomial coefficients of said cubic polynomial to be estimated.

4. Method according to claim 3, comprising:

- estimating the weight of the laundry loaded in the drum (3),
- estimating the coefficients of linear polynomial models based on said estimated laundry weight.

5. Method according to any of the claims from 1 to 4, comprising the steps of:

calculating a derivative value by performing a derivative of said cubic function associated to said cubic polynomial model, and
modifying said cubic polynomial model based on the derivative value.

6. Method according to any of the claims from 2 to 5, comprising the step of estimating the moisture of the laundry load at the beginning instant of said drying cycle by means of said cubic polynomial model $\hat{Y}(t)$.

7. Laundry drying machine (1) comprising:

a rotatable laundry drum (3) designed to rotate about an axis (6),
an electric motor (9) for rotating said rotatable laundry drum (3) about its axis (6),
hot air generator means (11) for supplying a drying airflow to the laundry drum (3),

electronic control means (20), which control said electric motor (9) and/or said hot air generator means (11) during a drying cycle based on physicals quantities being associated with said rotatable laundry drum (3), said electric motor (9), and said hot air generator means (11),

wherein said electronic control means (20) are further configured to:

a) collect said physicals quantities during an initial phase of said drying cycle, wherein said physicals quantities comprising: a first quantity indicative of the inertia of said laundry drum loaded with laundry, a second quantity indicative of the temperature of the drying airflow, a third quantity indicative of a static unbalance of said laundry drum loaded with laundry, a fourth quantity indicative of a fan speed comprised in said hot air generator means (11), a fifth quantity indicative of the air temperature at the outlet of the drum of said hot air generator means (11), a sixth quantity indicative of motor torque, a seventh quantity indicative of the mean torque during the drying cycle,
b) perform an estimation of polynomial coefficients of a cubic polynomial model indicative of an estimated change of the laundry moisture over the time, based on respective linear polynomial models comprising said collected physicals quantities,
c) perform an estimation of the laundry moisture by said cubic polynomial model based on said estimated polynomial coefficients.

8. Laundry drying machine according to claims 7, wherein said cubic polynomial model comprises a cubic function:

$$\hat{Y}(t)=a+b*t+c*t^2+d*t^3$$

wherein a, b, c, and d, are said polynomial coefficients,
$\hat{Y}(t)$ is indicative of the laundry moisture,
t is the instant wherein the laundry moisture is estimated.

9. Laundry drying machine according to claim 8, wherein said electronic control means (20) are configured to estimate said polynomial coefficients based on the following linear polynomial models:

$$a=\alpha0+ \alpha1*x1+ \alpha2*x2+\alpha3*x3+\alpha4*x4+ \alpha5*x5+ \alpha6*x6+ \alpha7*x7$$

$$b=\beta0+ \beta1*x1+ \beta2*x2+ \beta3*x3+ \beta4*x4+ \beta5*x5+ \beta6*x6+ \beta7*x7$$

$$c=\gamma0+ \gamma1*x1+ \gamma2*x2+ \gamma3*x3+ \gamma4*x4+ \gamma5*x5+ \gamma6*x6+ \gamma7*x7$$

$$d= \delta0+ \delta1*x1+ \delta2*x2+ \delta3*x3+ \delta4*x4+ \delta5*x5+ \delta6*x6+ \delta7*x7$$

wherein:

$\alpha0, \alpha1, \alpha2, \alpha3, \alpha4, \alpha5, \alpha6, \alpha7, \beta0, \beta1, \beta2, \beta3, \beta4, \beta5, \beta6, \beta7, \gamma0, \gamma1, \gamma2, \gamma3, \gamma4, \gamma5, \gamma6, \gamma7, \delta0, \delta1, \delta2, \delta3, \delta4, \delta5, \delta6, \delta7$ are vectors of coefficients of linear polynomial models from linear regression used to estimate the polynomial coefficients a, b, c, d of a cubic polynomial model,
x1, x2, x3, x4, x5, x6 and x7 are variables associated with said physicals quantities,
a, b, c and d are said polynomial coefficients of said cubic polynomial to be estimated.

10. Laundry drying machine according to claim 9, wherein said electronic control means (20) are configured to:

- estimate the weight of the laundry loaded in said drum (3),
- estimate the coefficients of linear polynomial models based on said estimated laundry weight.

11. Laundry drying machine according to any of the claims from 7 to 10, wherein said electronic control means (20) are configured to end the drying cycle based on a comparison between the moisture estimated by said cubic polynomial model at prefixed instants, and a moisture threshold.

12. Laundry drying machine according to any of the claims from 7 to 11, wherein said electronic control means (20) are configured to estimate, during said drying cycle, the time to end (TTE) of said drying cycle based on a comparison between the moisture estimated by said cubic polynomial model and said moisture threshold, and provide to the user information indicative of said estimated time to end (TTE).

13. Laundry drying machine according to any of the claims from 7 to 12, wherein said electronic control means (20) are configured to calculate a derivative value by performing a derivative of said cubic function associated to said cubic polynomial model, and modify said cubic polynomial model based on the derivative value.

14. Laundry drying machine according to any of the claims from 7 to 13, wherein said electronic control means (20) are configured to estimate the moisture of the laundry load at the beginning instant of said drying cycle by means of said cubic polynomial model Ŷ(t).

15. Laundry drying machine according to any of the claims from 7 to 14, wherein the timespan of said initial phase of said drying cycle is greater than, or equal to, about 1 minute, greater than, or equal to, about 3 minutes, greater than, or equal to, about 5 minutes, greater than, or equal to, about 15 minutes, or greater than, or equal to, about 20 minutes.

**Patentansprüche**

1. Verfahren zum Steuern einer Wäschetrocknermaschine (1), die Folgendes umfasst:

   eine drehbare Wäschetrommel (3), die konzipiert ist, sich um eine Achse (6) zu drehen, und angepasst ist, mit Wäsche beladen zu werden,
   einen Elektromotor (9) zum Drehen der drehbaren Wäschetrommel (3) um ihre Achse (6),
   ein Heißlufterzeugungsmittel (11) zum Zuführen eines Trocknungsluftstroms zur Wäschetrommel (3),
   wobei das Verfahren den Schritt des Steuerns des Elektromotors (9) und des Heißlufterzeugungsmittels (11) während eines Trocknungszyklus auf Basis von einer oder
   mehreren physischen Größen umfasst, die mit der drehbaren Wäschetrommel (3), die mit Wäsche beladen ist, dem Elektromotor (9) und dem Heißlufterzeugungsmittel (11) verknüpft sind, wobei das Verfahren ferner Folgendes umfasst:

   a) Sammeln der physischen Größen während einer Anfangsphase des Trocknungszyklus, wobei die physischen Größen, die während der Anfangsphase zu sammeln sind, Folgendes umfassen: eine erste Größe, die die Trägheit der mit Wäsche beladenen Wäschetrommel anzeigt, eine zweite Größe, die die Temperatur des Trocknungsluftstroms anzeigt, eine dritte Größe, die ein statisches Ungleichgewicht der mit Wäsche beladenen Wäschetrommel anzeigt, eine vierte Größe, die eine Drehzahl eines Gebläses anzeigt, das im Heißlufterzeugungsmittel (11) umfasst ist, eine fünfte Größe, die die Lufttemperatur am Auslass der Trommel des Heißlufterzeugungsmittels (11) anzeigt, eine sechste Größe, die ein Motordrehmoment anzeigt, eine siebte Größe, die das mittlere Drehmoment während des Trocknungszyklus anzeigt,
   b) Durchführen einer Schätzung von polynomen Koeffizienten eines kubischen Polynommodells, die eine geschätzte Änderung der Wäschefeuchtigkeit über die Zeit anzeigen, auf Basis von jeweiligen linearen Polynommodellen, die die gesammelten physischen Größen umfassen,
   c) Durchführen einer Schätzung der Wäschefeuchtigkeit durch das kubische Polynommodell auf Basis der geschätzten polynomen Koeffizienten.

2. Verfahren nach Anspruch 1, wobei das kubische Polynommodell eine kubische Funktion umfasst:

$$\hat{Y}(t) = a + b*t + c*t^2 + d*t^3$$

   wobei a, b, c und d die polynomen Koeffizienten sind, Ŷ(t) die Wäschefeuchtigkeit anzeigt,
   t der Moment ist, in dem die Wäschefeuchtigkeit geschätzt wird.

3. Verfahren nach Anspruch 2, wobei die polynomen Koeffizienten durch die folgenden linearen Polynommodelle geschätzt werden:

$$a = \alpha 0 + \alpha 1*x1 + \alpha 2*x2 + \alpha 3*x3 + \alpha 4*x4 + \alpha 5*x5 + \alpha 6*x6 + \alpha 7*x7$$

$$b=\beta 0+ \beta 1*x1+ \beta 2*x2+ \beta 3*x3+ \beta 4*x4+ \beta 5*x5+ \beta 6*x6+ \beta 7*x7$$

$$c=\gamma 0+ \gamma 1*x1+ \gamma 2*x2+ \gamma 3*x3+ \gamma 4*x4+ \gamma 5*x5+ \gamma 6*x6+ \gamma 7*x7$$

$$d= \delta 0+ \delta 1*x1+ \delta 2*x2+ \delta 3*x3+ \delta 4*x4+ \delta 5*x5+ \delta 6*x6+ \delta 7*x7$$

wobei:

$\alpha 0, \alpha 1, \alpha 2, \alpha 3, \alpha 4, \alpha 5, \alpha 6, \alpha 7, \beta 0, \beta 1, \beta 2, \beta 3, \beta 4, \beta 5, \beta 6, \beta 7, \gamma 0, \gamma 1, \gamma 2, \gamma 3, \gamma 4, \gamma 5, \gamma 6, \gamma 7, \delta 0, \delta 1, \delta 2, \delta 3, \delta 4, \delta 5, \delta 6, \delta 7$ Vektoren von Koeffizienten von linearen Polynommodellen aus einer linearen Regression sind, die zum Schätzen der polynomen Koeffizienten a, b, c, d eines kubischen Polynommodells verwendet werden, x1, x2, x3, x4, x5, x6 und x7 Variablen sind, die mit den gesammelten physischen Größen verknüpft sind, a, b, c und d die polynomen Koeffizienten des zu schätzenden kubischen Polynoms sind.

4. Verfahren nach Anspruch 3, das Folgendes umfasst:

- Schätzen des Gewichts der in die Trommel (3) geladenen Wäsche,
- Schätzen der Koeffizienten von linearen Polynommodellen auf Basis des geschätzten Wäschegewichts.

5. Verfahren nach einem der Ansprüche 1 bis 4, das die folgenden Schritte umfasst: Berechnen eines Ableitungswertes durch Durchführen einer Ableitung der kubischen Funktion, die mit dem kubischen Polynommodell verknüpft ist, und Modifizieren des kubischen Polynommodells auf Basis des Ableitungswertes.

6. Verfahren nach einem der Ansprüche 2 bis 5, das den Schritt des Schätzens der Feuchtigkeit der Wäscheladung im Anfangsmoment des Trocknungszyklus mittels des kubischen Polynommodells Ŷ(t) umfasst.

7. Wäschetrocknermaschine (1), die Folgendes umfasst:

eine drehbare Wäschetrommel (3), die konzipiert ist, sich um eine Achse (6) zu drehen,
einen Elektromotor (9) zum Drehen der drehbaren Wäschetrommel (3) um ihre Achse (6),
ein Heißlufterzeugungsmittel (11) zum Zuführen eines Trocknungsluftstroms zur Wäschetrommel (3),
ein elektronisches Steuermittel (20), das den Elektromotor (9) und/oder das Heißlufterzeugungsmittel (11) während eines Trocknungszyklus auf Basis von physischen Größen steuert, die mit der drehbaren Wäschetrommel (3), dem Elektromotor (9) und dem Heißlufterzeugungsmittel (11) verknüpft sind,
wobei das elektronische Steuermittel (20) ferner zu Folgendem ausgelegt ist:

a) Sammeln der physischen Größen während einer Anfangsphase des Trocknungszyklus, wobei die physischen Größen Folgendes umfassen: eine erste Größe, die die Trägheit der mit Wäsche beladenen Wäschetrommel anzeigt, eine zweite Größe, die die Temperatur des Trocknungsluftstroms anzeigt, eine dritte Größe, die ein statisches Ungleichgewicht der mit Wäsche beladenen Wäschetrommel anzeigt, eine vierte Größe, die eine Drehzahl eines Gebläses anzeigt, das im Heißlufterzeugungsmittel (11) umfasst ist, eine fünfte Größe, die die Lufttemperatur am Auslass der Trommel des Heißlufterzeugungsmittels (11) anzeigt, eine sechste Größe, die ein Motordrehmoment anzeigt, eine siebte Größe, die das mittlere Drehmoment während des Trocknungszyklus anzeigt,
b) Durchführen einer Schätzung von polynomen Koeffizienten eines kubischen Polynommodells, die eine geschätzte Änderung der Wäschefeuchtigkeit über die Zeit anzeigen, auf Basis von jeweiligen linearen Polynommodellen, die die gesammelten physischen Größen umfassen,
c) Durchführen einer Schätzung der Wäschefeuchtigkeit durch das kubische Polynommodell auf Basis der geschätzten polynomen Koeffizienten.

8. Wäschetrocknermaschine nach den Ansprüchen 7, wobei das kubische Polynommodell eine kubische Funktion umfasst:

$$\hat{Y}(t)=a+b*t+c*t^2+d*t^3$$

wobei a, b, c und d die polynomen Koeffizienten sind, Ŷ(t) die Wäschefeuchtigkeit anzeigt,

t der Moment ist, in dem die Wäschefeuchtigkeit geschätzt wird.

9. Wäschetrocknermaschine nach Anspruch 8, wobei das elektronische Steuermittel (20) dazu ausgelegt ist, die polynomen Koeffizienten auf Basis der folgenden linearen Polynommodelle zu schätzen:

$$a=\alpha 0+ \ \alpha 1*x1+ \ \alpha 2*x2+\alpha 3*x3+\alpha 4*x4+ \ \alpha 5*x5+ \ \alpha 6*x6+ \ \alpha 7*x7$$

$$b=\beta 0+ \ \beta 1*x1+ \ \beta 2*x2+ \ \beta 3*x3+ \ \beta 4*x4+ \ \beta 5*x5+ \ \beta 6*x6+ \ \beta 7*x7$$

$$c=\gamma 0+ \ \gamma 1*x1+ \ \gamma 2*x2+ \ \gamma 3*x3+ \ \gamma 4*x4+ \ \gamma 5*x5+ \ \gamma 6*x6+ \ \gamma 7*x7$$

$$d= \ \delta 0+ \ \delta 1*x1+ \ \delta 2*x2+ \ \delta 3*x3+ \ \delta 4*x4+ \ \delta 5*x5+ \ \delta 6*x6+ \ \delta 7*x7$$

wobei:

$\alpha 0, \alpha 1, \alpha 2, \alpha 3, \alpha 4, \alpha 5, \alpha 6, \alpha 7, \beta 0, \beta 1, \beta 2, \beta 3, \beta 4, \beta 5, \beta 6, \beta 7, \gamma 0, \gamma 1, \gamma 2, \gamma 3, \gamma 4, \gamma 5, \gamma 6, \gamma 7, \delta 0, \delta 1, \delta 2, \delta 3, \delta 4, \delta 5, \delta 6, \delta 7$ Vektoren von Koeffizienten von linearen Polynommodellen aus einer linearen Regression sind, die zum Schätzen der polynomen Koeffizienten a, b, c, d eines kubischen Polynommodells verwendet werden,
x1, x2, x3, x4, x5, x6 und x7 Variablen sind, die mit den physischen Größen verknüpft sind,
a, b, c und d die polynomen Koeffizienten des zu schätzenden kubischen Polynoms sind.

10. Wäschetrocknermaschine nach Anspruch 9, wobei das elektronische Steuermittel (20) zu Folgendem ausgelegt ist:

- Schätzen des Gewichts der in die Trommel (3) geladenen Wäsche,
- Schätzen der Koeffizienten von linearen Polynommodellen auf Basis des geschätzten Wäschegewichts.

11. Wäschetrocknermaschine nach einem der Ansprüche 7 bis 10, wobei das elektronische Steuermittel (20) dazu ausgelegt ist, den Trocknungszyklus auf Basis eines Vergleichs zwischen der Feuchtigkeit, die vom kubischen Polynommodell in zuvor festgelegten Momenten geschätzt wird, und einem Feuchtigkeitsschwellwert zu beenden.

12. Wäschetrocknermaschine nach einem der Ansprüche 7 bis 11, wobei das elektronische Steuermittel (20) dazu ausgelegt ist, während des Trocknungszyklus die Zeit bis zum Ende (TTE) des Trocknungszyklus auf Basis eines Vergleichs zwischen der Feuchtigkeit, die vom kubischen Polynommodell geschätzt wird, und dem Feuchtigkeitsschwellwert zu schätzen und dem Benutzer Informationen bereitzustellen, die die geschätzte Zeit bis zum Ende (TTE) anzeigen.

13. Wäschetrocknermaschine nach einem der Ansprüche 7 bis 12, wobei das elektronische Steuermittel (20) dazu ausgelegt ist, durch Durchführen einer Ableitung der kubischen Funktion, die mit dem kubischen Polynommodell verknüpft ist, einen Ableitungswert zu berechnen und das kubische Polynommodell auf Basis des Ableitungswertes zu modifizieren.

14. Wäschetrocknermaschine nach einem der Ansprüche 7 bis 13, wobei das elektronische Steuermittel (20) dazu ausgelegt ist, die Feuchtigkeit der Wäscheladung im Anfangsmoment des Trocknungszyklus mittels des kubischen Polynommodells Ŷ(t) zu schätzen.

15. Wäschetrocknermaschine nach einem der Ansprüche 7 bis 14, wobei die Zeitspanne der Anfangsphase des Trocknungszyklus größer als oder gleich etwa 1 Minute, größer als oder gleich etwa 3 Minuten, größer als oder gleich etwa 5 Minuten, größer als oder gleich etwa 15 Minuten oder größer als oder gleich etwa 20 Minuten ist.

**Revendications**

1. Procédé de commande d'une machine sèche-linge (1), qui comprend :

un tambour à linge (3) rotatif destiné à entrer en rotation autour d'un axe (6) et conçu pour être chargé de linge,
un moteur électrique (9) pour faire entrer en rotation ledit tambour à linge (3) rotatif autour de son axe (6),

des moyens de génération d'air chaud (11) pour alimenter le tambour à linge (3) en écoulement d'air de séchage, ledit procédé comprenant l'étape consistant à commander ledit moteur électrique (9) et lesdits moyens générateurs d'air chaud (11) pendant un cycle de séchage, sur la base d'une ou de plusieurs quantités physiques associées audit tambour à linge (3) rotatif chargé de linge, audit moteur électrique (9) et auxdits moyens générateurs d'air chaud (11), le procédé comprenant en outre :

a) la collecte desdites quantités physiques pendant une phase initiale dudit cycle de séchage, lesdites quantités physiques à collecter pendant ladite phase initiale comprenant : une première quantité indicative de l'inertie dudit tambour à linge chargé de linge, une deuxième quantité indicative de la température de l'écoulement d'air de séchage, une troisième quantité indicative d'un déséquilibre statique dudit tambour à linge chargé de linge, une quatrième quantité indicative d'une vitesse de soufflante comprise dans lesdits moyens de génération d'air chaud (11), une cinquième quantité indicative de la température de l'air au niveau de la sortie du tambour desdits moyens de génération d'air chaud (11), une sixième quantité indicative du couple moteur, une septième quantité indicative du couple moyen pendant le cycle de séchage,

b) la réalisation d'une estimation de coefficients polynomiaux d'un modèle polynomial cubique indicative d'un changement estimé de l'humidité du linge au cours du temps, sur la base de modèles polynomiaux linéaires respectifs comprenant lesdites quantités physiques collectées,

c) la réalisation d'une estimation de l'humidité du linge par ledit modèle polynomial cubique sur la base desdits coefficients polynomiaux estimés.

2. Procédé selon la revendication 1, dans lequel ledit modèle polynomial cubique comprend une fonction cubique :

$$\hat{Y}(t)=a+b*t+c*t^2+d*t^3$$

a, b, c, et d, étant lesdits coefficients polynomiaux,
$\hat{Y}(t)$ étant indicatif de l'humidité du linge,
t étant l'instant où l'humidité du linge est estimée.

3. Procédé selon la revendication 2, dans lequel lesdits coefficients polynomiaux sont estimés par les modèles polynomiaux linéaires suivants :

$$a=\alpha 0+ \alpha 1*x1+ \alpha 2*x2+\alpha 3*x3+\alpha 4*x4+ \alpha 5*x5+ \alpha 6*x6+ \alpha 7*x7$$

$$b=\beta 0+ \beta 1*x1+ \beta 2*x2+ \beta 3*x3+ \beta 4*x4+ \beta 5*x5+ \beta 6*x6+ \beta 7*x7$$

$$c=\gamma 0+ \gamma 1*x1+ \gamma 2*x2+ \gamma 3*x3+ \gamma 4*x4+ \gamma 5*x5+ \gamma 6*x6+ \gamma 7*x7$$

$$d= \delta 0+ \delta 1*x1+ \delta 2*x2+ \delta 3*x3+ \delta 4*x4+ \delta 5*x5+ \delta 6*x6+ \delta 7*x7$$

$\alpha 0, \alpha 1, \alpha 2, \alpha 3, \alpha 4, \alpha 5, \alpha 6, \alpha 7, \beta 0, \beta 1, \beta 2, \beta 3, \beta 4, \beta 5, \beta 6, \beta 7, \gamma 0, \gamma 1, \gamma 2, \gamma 3, \gamma 4, \gamma 5, \gamma 6, \gamma 7, 50, \delta 1, \delta 2, \delta 3, \delta 4, \delta 5, \delta 6, \delta 7$ étant des vecteurs de coefficients de modèles polynomiaux linéaires provenant d'une régression linéaire utilisée pour estimer les coefficients polynomiaux a, b, c, d d'un modèle polynomial cubique, x1, x2, x3, x4, x5, x6 et x7 étant des variables associées auxdites quantités physiques collectées, a, b, c et d étant lesdits coefficients polynomiaux dudit polynôme cubique à estimer.

4. Procédé selon la revendication 3, comprenant :

- l'estimation du poids du linge chargé dans le tambour (3),
- l'estimation des coefficients de modèles polynomiaux linéaires sur la base dudit poids de linge estimé.

5. Procédé selon l'une quelconque des revendications 1 à 4, comprenant les étapes consistant à : calculer une valeur dérivée en réalisant une dérivée de ladite fonction cubique associée audit modèle polynomial cubique, et modifier ledit modèle polynomial cubique sur la base de la valeur dérivée.

6. Procédé selon l'une quelconque des revendications 2 à 5, comprenant l'étape consistant à estimer l'humidité de la charge de linge à l'instant de début dudit cycle de séchage au moyen dudit modèle polynomial cubique $\hat{Y}(t)$.

7. Machine sèche-linge (1) comprenant :

   un tambour à linge (3) rotatif destiné à entrer en rotation autour d'un axe (6),
   un moteur électrique (9) pour faire entrer en rotation ledit tambour à linge (3) rotatif autour de son axe (6),
   des moyens de génération d'air chaud (11) pour alimenter le tambour à linge (3) en écoulement d'air de séchage,
   des moyens de commande électronique (20), qui commandent ledit moteur électrique (9) et/ou lesdits moyens de génération d'air chaud (11) pendant un cycle de séchage sur la base de quantités physiques associées audit tambour à linge (3) rotatif, audit moteur électrique (9), et auxdits moyens de génération d'air chaud (11), lesdits moyens de commande électronique (20) étant en outre configurés pour :

   a) collecter lesdites quantités physiques pendant une phase initiale dudit cycle de séchage, lesdites quantités physiques à collecter pendant ladite phase initiale comprenant : une première quantité indicative de l'inertie dudit tambour à linge chargé de linge, une deuxième quantité indicative de la température de l'écoulement d'air de séchage, une troisième quantité indicative d'un déséquilibre statique dudit tambour à linge chargé de linge, une quatrième quantité indicative d'une vitesse de soufflante comprise dans lesdits moyens de génération d'air chaud (11), une cinquième quantité indicative de la température de l'air au niveau de la sortie du tambour desdits moyens de génération d'air chaud (11), une sixième quantité indicative du couple moteur, une septième quantité indicative du couple moyen pendant le cycle de séchage,
   b) réaliser une estimation de coefficients polynomiaux d'un modèle polynomial cubique indicative d'un changement estimé de l'humidité du linge au cours du temps, sur la base de modèles polynomiaux linéaires respectifs comprenant lesdites quantités physiques collectées,
   c) réaliser une estimation de l'humidité du linge par ledit modèle polynomial cubique sur la base desdits coefficients polynomiaux estimés.

8. Machine sèche-linge selon la revendication 7, dans laquelle ledit modèle polynomial cubique comprend une fonction cubique :

$$\hat{Y}(t) = a + b*t + c*t^2 + d*t^3$$

   a, b, c, et d, étant lesdits coefficients polynomiaux,
   $\hat{Y}(t)$ étant indicatif de l'humidité du linge,
   t étant l'instant où l'humidité du linge est estimée.

9. Machine sèche-linge selon la revendication 8, dans laquelle lesdits moyens de commande électronique (20) sont configurés pour estimer lesdits coefficients polynomiaux sur la base des modèles polynomiaux linéaires suivants :

$$a = \alpha 0 + \alpha 1*x1 + \alpha 2*x2 + \alpha 3*x3 + \alpha 4*x4 + \alpha 5*x5 + \alpha 6*x6 + \alpha 7*x7$$

$$b = \beta 0 + \beta 1*x1 + \beta 2*x2 + \beta 3*x3 + \beta 4*x4 + \beta 5*x5 + \beta 6*x6 + \beta 7*x7$$

$$c = \gamma 0 + \gamma 1*x1 + \gamma 2*x2 + \gamma 3*x3 + \gamma 4*x4 + \gamma 5*x5 + \gamma 6*x6 + \gamma 7*x7$$

$$d = \delta 0 + \delta 1*x1 + \delta 2*x2 + \delta 3*x3 + \delta 4*x4 + \delta 5*x5 + \delta 6*x6 + \delta 7*x7$$

   $\alpha 0, \alpha 1, \alpha 2, \alpha 3, \alpha 4, \alpha 5, \alpha 6, \alpha 7, \beta 0, \beta 1, \beta 2, \beta 3, \beta 4, \beta 5, \beta 6, \beta 7, \gamma 0, \gamma 1, \gamma 2, \gamma 3, \gamma 4, \gamma 5, \gamma 6, \gamma 7, \delta 0, \delta 1, \delta 2, \delta 3, \delta 4, \delta 5, \delta 6, \delta 7$ étant des vecteurs de coefficients de modèles polynomiaux linéaires provenant d'une régression linéaire utilisée pour estimer les coefficients polynomiaux a, b, c, d d'un modèle polynomial cubique, x1, x2, x3, x4, x5, x6 et x7 étant des variables associées auxdites quantités physiques,
   a, b, c et d étant lesdits coefficients polynomiaux dudit polynôme cubique à estimer.

10. Machine sèche-linge selon la revendication 9, dans laquelle lesdits moyens de commande électronique (20) sont configurés pour :

   - estimer le poids du linge chargé dans ledit tambour (3),
   - estimer les coefficients de modèles polynomiaux linéaires sur la base dudit poids de linge estimé.

**11.** Machine sèche-linge selon l'une quelconque des revendications 7 à 10, dans laquelle lesdits moyens de commande électronique (20) sont configurés pour terminer le cycle de séchage sur la base d'une comparaison entre l'humidité estimée par ledit modèle polynomial cubique à des instants fixés au préalable, et un seuil d'humidité.

**12.** Machine sèche-linge selon l'une quelconque des revendications 7 à 11, dans laquelle lesdits moyens de commande électronique (20) sont configurés pour estimer, pendant ledit cycle de séchage, le temps jusqu'à la fin (TTE) dudit cycle de séchage sur la base d'une comparaison entre l'humidité estimée par ledit modèle polynomial cubique et ledit seuil d'humidité, et fournir à l'utilisateur des informations indicatives dudit temps jusqu'à la fin (TTE) estimé.

**13.** Machine sèche-linge selon l'une quelconque des revendications 7 à 12, dans laquelle lesdits moyens de commande électronique (20) sont configurés pour calculer une valeur dérivée en réalisant une dérivée de ladite fonction cubique associée audit modèle polynomial cubique, et modifier ledit modèle polynomial cubique sur la base de la valeur dérivée.

**14.** Machine sèche-linge selon l'une quelconque des revendications 7 à 13, dans laquelle lesdits moyens de commande électronique (20) sont configurés pour estimer l'humidité de la charge de linge à l'instant de début dudit cycle de séchage au moyen dudit modèle polynomial cubique $\hat{Y}(t)$.

**15.** Machine sèche-linge selon l'une quelconque des revendications 7 à 14, dans laquelle l'intervalle de temps de ladite phase initiale dudit cycle de séchage est supérieur à, ou égal à, environ 1 minute, supérieur à, ou égal à, environ 3 minutes, supérieur à, ou égal à, environ 5 minutes, supérieur à, ou égal à, environ 15 minutes, ou supérieur à, ou égal à, environ 20 minutes.

FIG.1

FIG.2

FIG.3

OFFLINE

example of moisture reference
(reconstruction from
weight evolution)

examples of signals from dataset

- inertia of laundry drum and laundry
- temperature of the drying airflow
- static unbalance    of laundry drum and laundry
- fan speed
- air temperature at the outlet of the drum
- motor torque during the drying cycle

hand-craft feature
engineering

features:
x1, x2, x3,....

models:

y*=f(a,b)
y*=g(a,b,c)
.
.
.

Fit

Analysis

parameters of
the best model

regularized
Linear
regression

dry
laundry
load
estimation

best model
y=a+bt+ct^2+dt^3

coefficients of linear models
used to estimate  parameters
of the best model:

[A]    [B]

FIG. 4a

EP 3 990 689 B1

FIG. 4b

**EP 3 990 689 B1**

**REFERENCES CITED IN THE DESCRIPTION**

**Patent documents cited in the description**

- EP 2927366 A1
- JP 2019097954 A
- EP 2599913 A1